(19) **Europäisches Patentamt / European Patent Office / Office européen des brevets**

(11) **EP 2 009 470 B1**

(12) **EUROPEAN PATENT SPECIFICATION**

(45) Date of publication and mention
of the grant of the patent:
**23.01.2013 Bulletin 2013/04**

(21) Application number: **07741727.7**

(22) Date of filing: **16.04.2007**

(51) Int Cl.:
**G02B 5/18** (2006.01)     **G21K 1/06** (2006.01)

(86) International application number:
**PCT/JP2007/058291**

(87) International publication number:
**WO 2007/119852 (25.10.2007 Gazette 2007/43)**

(54) **MULTI-LAYER FILM TYPE DIFFRACTION GRATING**

DIFFRAKTIONSGITTER FÜR MEHRSCHICHTIGE FOLIEN

FILM MULTICOUCHE DE TYPE RESEAU DE DIFFRACTION

(84) Designated Contracting States:
**FR**

(30) Priority: **14.04.2006 JP 2006112213**

(43) Date of publication of application:
**31.12.2008 Bulletin 2009/01**

(73) Proprietors:
• **Japan Atomic Energy Agency**
 **Naka-gun,**
 **Ibaraki 319-1184 (JP)**
• **Shimadzu Corporation**
 **Kyoto-shi, Kyoto 604-8511 (JP)**
• **NTT Advanced Technology Corporation**
 **Tokyo 163-0431 (JP)**

(72) Inventors:
• **KOIKE, Masato**
 **Souraku-gun, Kyoto 619-0215 (JP)**
• **ISHINO, Masahiko**
 **Souraku-gun, Kyoto 619-0215 (JP)**
• **IWAI, Nobuyuki**
 **Kyoto-shi, Kyoto 604-8511 (JP)**
• **SASAI, Hiroyuki**
 **Kyoto-shi, Kyoto 604-8511 (JP)**
• **TAKENAKA, Hisataka**
 **Shinjuku-ku, Tokyo 163-0431 (JP)**
• **HATAKEYAMA, Masatoshi**
 **Shinjuku-ku, Tokyo 163-0431 (JP)**

(74) Representative: **Domenego, Bertrand**
 **Cabinet Lavoix**
 **2, place d'Estienne d'Orves**
 **75441 Paris Cedex 09 (FR)**

(56) References cited:
 **JP-A- 1 309 000      JP-A- 63 266 400**
 **JP-A- 2006 133 280**

• **KOIKE MASATO ET AL: "Design of a high-efficiency grazing incidence monochromator with multilayer-coated laminar gratings for the 1-6 keV region", REVIEW OF SCIENTIFIC INSTRUMENTS, AIP, MELVILLE, NY, US, vol. 77, no. 2, 9 February 2006 (2006-02-09), pages 23101-1-023101-4, XP012092690, ISSN: 0034-6748, DOI: DOI:10.1063/1.2166668**
• **ERIC LOUIS, EBERHARD A. SPILLER, SALIM ABDALI ET AL.: "Multilayer x-ray mirrors for the objective crystal spectrometer on the Spectrum Roentgen Gamma satellite", PROC. SPIE, vol. 2515, 1995, page 194, XP002631616,**
• **JARK ET AL: "Enhancement of diffraction grating efficiencies in the soft x-ray region by a multilayer coating", OPTICS COMMUNICATIONS, NORTH-HOLLAND PUBLISHING CO. AMSTERDAM, NL, vol. 60, no. 4, 15 November 1986 (1986-11-15), pages 201-205, XP024455048, ISSN: 0030-4018, DOI: DOI:10.1016/0030-4018(86)90424-4 [retrieved on 1986-11-15]**
• **FALLON J M ET AL: "Microstructure of sputter-deposited Co/Si multilayer thin films", JOURNAL OF APPLIED PHYSICS, AMERICAN INSTITUTE OF PHYSICS. NEW YORK, US, vol. 88, no. 5, 1 September 2000 (2000-09-01), pages 2400-2407, XP012051437, ISSN: 0021-8979, DOI: DOI: 10.1063/1.1287773**

- **MASATO KOIKE ET AL.: 'Design of a high-efficiency grazing incidence monochromator with multilayer-coated laminar gratings for the 1-6 keV region' REVIEW OF SCIENCE INSTRUMENTS vol. 77, February 2006, pages 023101-1 - 023101-4, XP012092690**

- **THE CHEMICAL SOCIETY OF JAPAN: '5th edition Jikken Kagaku Koza 10 Busshitsu no Kozo II Bunko Ge', 05 August 2005, MARUZEN CO., LTD. pages 106 - 141, XP003018554**

**Description**

TECHNICAL FIELD

The present invention relates to multilayer diffraction gratings that may be used to generate monochromatic light in the soft X-ray region or disperse the incident light by wavelength. More particularly, the present invention provides multilayer diffraction gratings having high diffraction efficiency and resolution in a wavelength region of 0.1-1 nm, where conventional diffraction gratings suffer their extremely low diffraction efficiency and it makes hard to separate into spectral components from a polychromatic light.

BACKGROUND ART

Forming a multilayer as a means of increasing the reflectance of a reflector is a practice that is more than half a century old. If this means is to be employed in order to increase diffraction efficiency of a diffraction grating, various conditions have to be satisfied and generally diffraction gratings are hardly practicable if they are to be used in the soft X-ray region.

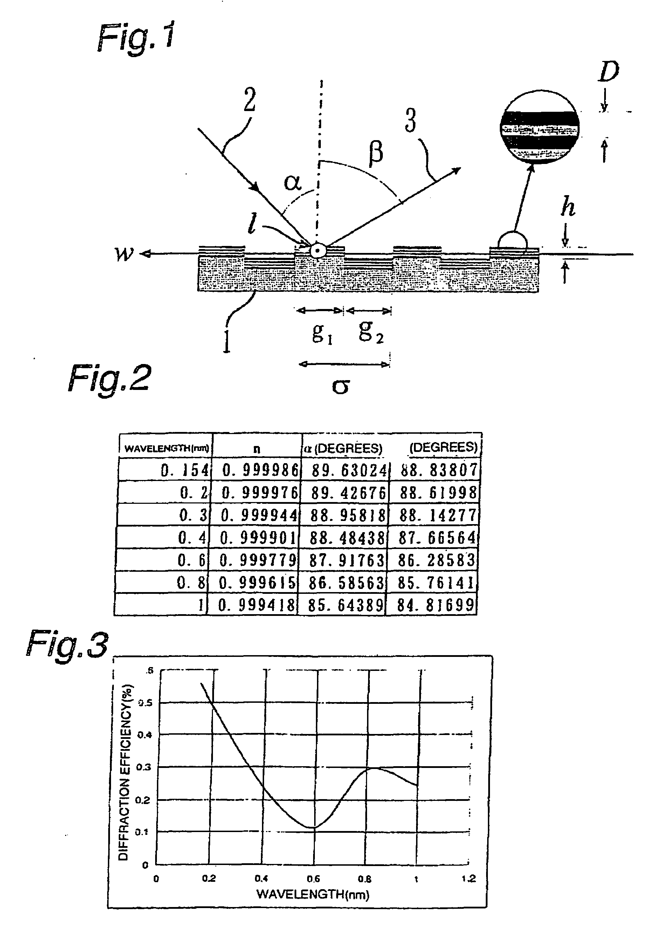

Laminar-type diffraction gratings are generally required to satisfy certain conditions in order to attain a maximum efficiency in terms of the depth of grooves in the laminar-type diffraction grating (see FIG. 1) or the ratio (called duty ratio) between the width of a ridge (land) and the grating constant (groove interval at the center of the diffraction grating); in addition, if a multilayer film is to be formed on the surface of the laminar-type diffraction grating with a view to increasing the diffraction efficiency, the multilayer should satisfy an extended Bragg condition (see, for example, Nonpatent Documents 1 and 2).

These four conditions have been studied individually but no unified and systematic guidelines have been shown in a so-called grazing-incidence region where a angle of incidence as measured from the surface normal is 80 degrees or more.

NONPATENT DOCUMENT 1: W. K. Warburton, Nucl. Instr. Meth. A 291, 278 (1990).
NONPATENT DOCUMENT 2: M. Koike and K. Sano, "The Fifth Series of Experimental Chemistry, Vol. 10, Spectroscopy and Diffraction II", Maruzen (2005), Chapter 2, Section 3, p. 106-141.

DISCLOSURE OF THE INVENTION

PROBLEMS TO BE SOLVED BY THE INVENTION

The present invention has been accomplished in order to solve those problems and its object is to provide diffraction gratings having high diffraction efficiency and resolution in a wavelength region of 0.1-1 nm where separating incident polylchromatic light by diffraction gratings into its spectral components (generate monochromatic light or dispersing the incident light by wavelength) has been difficult due to their extreme low efficiency, as well as to provide a spectroscopic apparatus using these diffraction gratings.

MEANS FOR SOLVING THE PROBLEMS

The present invention has been accomplished in order to solve the aforementioned problems and it comprises the conditions of a wavelength scanning mechanism and diffraction gratings in a spectroscopic apparatus that satisfy the following four conditions simultaneously regardless its scanning wavelength.

The four conditions are: (1) the condition to be satisfied by a diffraction grating in terms of a relation that specifies the correlation between each of the directions of incident light and diffracted light, and the grating constant; (2) the condition to be satisfied by the ratio (called duty ratio) between the width of a land (ridge) on a laminar-type diffraction grating and the diffraction grating constant, at which a maximum efficiency is attained; (3) the condition to be satisfied by the groove depth of the laminar-type diffraction grating, at which a maximum efficiency is attained; and (4) an extended Bragg condition for a multilayer film. Among these conditions, (1) and (4) shall assume the conditions described in Nonpatent Document 1 and on the basis of these conditions, one may design a diffraction grating of a groove shape that has a duty ratio and a groove depth which satisfy conditions (2) and (3).

In short, writing $\lambda$ for the wavelength of incident light, $\alpha$ for the angle of incidence measured from the surface normal, $\beta$ for the angle of diffraction of the diffracted light also measured from the same normal line, $\sigma$ for the interval between grooves in the diffraction grating, n for the average refractive index of a multilayer film ($\delta = n-1$), $m_G$ for the diffraction order of the diffraction grating, $m_c$ for the interference order of the multilayer, h for the depth of grooves, $g_1$ for the width of a land, and $g_2$ for the width of a valley, the present invention is a multilayer diffraction grating that satisfies the following four conditions: 1) the formula of the diffraction grating, expressed by the following equation (1), that specifies the correlation between each of the directions of incident light and diffracted light and the diffraction grating constant:

**[Formula 1]**

$$m_G\lambda = \sigma(\sin\alpha + \sin\beta) \qquad (1)$$

2) an extended Bragg condition for the multilayer diffraction grating that is expressed by the following equation (2):

**[Formula 2]**

$$m_c\lambda = D(R_\alpha\cos\alpha + R_\beta\cos\beta) \qquad (2)$$

**[Formula 3]**

$$R_\alpha = \sqrt{1 - (2\delta - \delta^2)/\cos^2\alpha}, \qquad (3a)$$

$$R_\beta = \sqrt{1 - (2\delta - \delta^2)/\cos^2\beta}, \qquad (3b)$$

and, in addition to the conditions 1) and 2),

3) the condition, expressed by the following equation (4), for the groove depth of the multilayer film coated diffraction grating, at which a maximum diffraction efficiency is attained:

**[Formula 4]**

$$h = \lambda/4\cos\alpha \qquad (4)$$

4) the condition, expressed by the following equation (5), for the ratio (duty ratio, or D.R.) between the width of a land on the multilayer diffraction grating and the diffraction grating constant, at which a maximum diffraction efficiency is attained:

**[Formula 5]**

$$D.R. = \frac{g_1}{\sigma} = \frac{g_2 - h(\tan\alpha - \tan\beta)}{\sigma}, \qquad (5)$$

further characterized in that the multilayer consists of a pair of two materials, each materials pair consisting of cobalt and silicon dioxide, cobalt and silicon carbide, or cobalt and carbon.

It should also be noted that the above-described laminar-type diffraction grating can be realized, including the control over the duty ratio and unequal groove intervals, by the holographic process in which interference fringes are recorded on a photoresist coated diffraction grating's substrate by means of two coherent laser beams; furthermore, the multilayer film to be added to the resulting laminar-type diffraction grating can be realized by forming, for example, alternating vapor deposited tungsten and carbon layers by ion-beam sputtering method, magnetron sputtering method, or a like method.

In addition to its use as the diffraction grating, the present invention can also be used as a reflector having its surface coated with a multilayer film consisting of materials pairs, which is operated in such a way that light with a wavelength up to 2 nm but not shorter than 0.1 nm is incident at an angle of at least 80 degrees as measured from the surface normal.

EFFECTS OF THE INVENTION

The diffraction grating according to the present invention and the spectroscopic apparatus having high diffraction efficiency and high resolution in the wavelength range of 0.1-2 nm, to thereby enable the measurement of very weak light in the wavelength region. In addition, the multilayer can get rid of the decrease in reflectance that has occurred when light is incident at small angle on a monolayer metal film and, therefore, in the case of receiving light of the same flux width, the diffraction grating can be made less wide depending on the direction of ruling (perpendicular to the direction in which the grooves of the diffraction grating extend; namely, left and right sides of FIG. 1). The term "resolution" as used hereinabove means the value defined by the wavelength divided by the spectral (wavelength) width that can be distinguished by the spectroscope apparatus and the large value means, the higher the performance of resolution by wavelength.

BRIEF DESCRIPTION OF THE DRAWINGS

[FIG. 1] FIG. 1 is a schematic diagram showing a laminar-type multilayer film coated planar diffraction grating.
[FIG. 2] FIG. 2 is a table showing the principal parameters of the laminar-type multilayer film coated planar diffraction grating according to an Example of the present invention.
[FIG. 3] FIG. 3 is a graph showing the diffraction efficiency of the laminar-type multilayer film coated plane diffraction grating according to the Example of the present invention.

LEGEND

1: laminar-type multilayer film coated plane diffraction grating
2: incident light
3: diffracted light

BEST MODE FOR CARRYING OUT THE INVENTION

In the present invention, a pattern of grooves for a multilayer film coated diffraction grating is formed by the holographic method using laser light; then, with the resulting pattern used as a mask, laminar-type grooves are formed by ion-beam etching. In the next step, a multilayer film is deposited on the grooved surface by ion-beam sputtering method or magnetron sputtering method.

The zeroth-order light is referred to in accompanying claim 1 and this means the following: a diffraction grating generates diffracted lights that travel in different directions depending on the wavelength as well as light that travels in a direction of reflection (regular reflection) that satisfies Snell's law when the surface of the diffraction grating is assumed as a mirror and light is called as zeroth-order light.

EXAMPLE

Here is described the quantitative design of a diffraction grating by reference to FIGS. 1, 2 and 3. First, assume that $\sigma$, or the grating constant of the diffraction grating (groove interval at the center of the diffraction grating) which is a basic parameter of the grating is 1/1200 mm whereas the wavelength to be optimized is 0.3 nm. Also assume that a set consisting of a light element (or a light compound) layers and a heavy element (or a heavy compound) layers are stacked in multiple layers to form a soft X-ray multilayer which has a periodic length D of 6.6 nm. The soft X-ray multilayer film is composed of two materials A and B and as shown in FIG. 1, the sum of the film thicknesses for these materials A and B is the periodic length D.

In order to maximize the diffraction efficiency, 1) the diffraction condition for the multilayer film coated diffraction grating, which is expressed by

**[Formula 6]**

$$m_G\lambda = \sigma(\sin\alpha + \sin\beta) \qquad (1)$$

and

2) the Bragg condition for the multilayer coated diffraction grating, which is expressed by

**[Formula 7]**

$$m_C\lambda = D(R_\alpha\cos\alpha + R_\beta\cos\beta) \qquad (2)$$

must be satisfied. Equation (2) is sometimes referred to as an extended Bragg condition. Here, $\lambda$ is the wavelength of incident light, $\alpha$ is the angle of incidence measured from surface normal, and $\beta$ is the angle of diffraction of the diffracted light also measured from the same normal line, with each angle being positive in the counterclockwise direction (see FIG. 1). In addition, $R_\alpha$ and $R_\beta$ are respectively expressed by

**[Formula 8]**

$$R_\alpha = \sqrt{1-(2\delta-\delta^2)/\cos^2\alpha}, \qquad (3a)$$

$$R_\beta = \sqrt{1-(2\delta-\delta^2)/\cos^2\beta}, \qquad (3b)$$

and if n is written for the average refractive index of the multilayer film (the weighted average based on the film thickness of the real part of the complex refractive indices of the two materials used in the multilayer film), $\delta = 1-7$. Further, $m_G$ is the diffraction order of the diffraction grating and $m_c$ is the interference order of the multilayer film; in the Example under consideration, it is assumed that $m_G = mc = 1$. FIG. 2 lists the values of the incidence angle $\alpha$ and the diffraction angle $\beta$ at various wavelengths of the incident light that satisfy both equations (1) and (2) for the case where the materials pair in the multilayer film consists of Co and $SiO_2$ and where the respective layers have thicknesses of 2.64 nm and 3.96 nm. The materials pair of Co and $SiO_2$ was selected because it has no absorption edge in the wavelength region of 0.1-1 nm, thereby yielding high reflectance. Similar materials pairs are the set of cobalt and silicon carbide and that of cobalt and carbon.

Further, the optimum groove depth h, as obtained from equation (2.63) in Nonpatent Document 2, is

**[Formula 9]**

$$h = \lambda/4\cos\alpha \qquad (4)$$

and in the case of the Example, h = 4.12 nm.

In addition, defining h for the depth of grooves, $g_1$ for the width of a land, and $g_2$ for the width of a valley, the optimum duty ratio (D.R.) is

**[Formula 10]**

$$D.R. = \frac{g_1}{\sigma} = \frac{g_2 - h(\tan\alpha - \tan\beta)}{\sigma}, \qquad (5)$$

and in the case of the Example, D.R. = 0.2878-0.3. The laminar-type diffraction grating fabricated under these conditions was furnished with the above-described multilayer film in 30 periods (i.e., periodic length D shown in FIG. 1 is stacked in 30 bilayers), thereby preparing a multilayer film coated diffraction grating; the diffraction efficiency of this grating was numerically calculated at various wavelengths and the results are shown in FIGS. 2 and 3.

FIG. 2 is a table showing the principal parameters of the laminar-type multilayer film coated plane diffraction grating according to the Example of the present invention; the table shows, for each wavelength, the directions in which incident light should be applied and diffracted light picked up in order to attain a maximum diffraction efficiency with the multilayer film coated diffraction grating described in the Example. FIG. 3 is a diagram showing the diffraction efficiency curve of the laminar-type multilayer film coated plane diffraction grating according to the Example of the present invention; it shows the diffraction efficiency of the multilayer diffraction grating of the Example that was used under the conditions shown in FIG. 2.

Thus, the diffraction grating according to the present invention is characterized in that it has a diffraction efficiency ten to a hundred times as high as that of the additional diffraction grating having a monolayer metal film added thereto. To summarize the reasons: first, the shape of grooves on the laminar-type diffraction grating is optimized by considering the specification of the multilayer; second, the present inventors discovered materials pairs for use in the multilayer film that would present high reflectance in the 0.1 - 1 nm region. The second observation is applicable to non-laminar-type diffraction gratings for use in the same wavelength region, including a blazed-type diffraction gratings having grooves of a saw-toothed shape and even reflectors.

## Claims

1. A laminar-type multilayer diffraction grating having a multilayer film added to the surface, which multilayer being designed such that the angular conditions of incident light and diffracted light with respect to the used wavelength "$\lambda$" of 0.1 to 1 mm satisfy simultaneously:

   (1) the formula of a diffraction grating,

   $$\lambda m_G = \sigma(\sin\alpha + \sin\beta),$$

   (2) an extended Bragg condition of a multilayer film coated diffraction grating,

   $$m_C \lambda = D(R_\alpha \cos\alpha + R_\beta \cos\beta),$$

   $$R_\alpha = \sqrt{(1 - (2\delta - \delta^2)/\cos^2\alpha)},$$

   and

   $$R_\beta = \sqrt{(1 - (2\delta - \delta^2)/\cos^2\beta)}$$

   (3) the groove depth that suppresses the zeroth-order light

   $$h = \lambda/4\cos\alpha,$$

   and
   (4) the condition for the ratio between the width of a land and the grating constant,

$$D.R.=g_1/\sigma=(g_2-h(\tan\alpha-\tan\beta))/\sigma,$$

wherein "$\alpha$" is the angle of incidence measured from the surface normal and is 80 degrees or more, "$\beta$" is the angle of diffraction of the diffracted light also measured from the same normal line, "D" is a periodic length of the multiple layer, "n" is the average refractive index of a multilayer film ($\delta= n-1$), "$M_G$" is the diffraction order of the diffraction grating, "$m_c$" is the interference order of the multilayer, "h" is the depth of grooves, "$g_1$" is the width of a land, and "$g_2$" is the width of a valley,

further **characterized in that** the multilayer consists of a pair of two materials in multiple layers, each materials pair consisting of cobalt and silicon dioxide, cobalt and silicon carbide, or cobalt and carbon.

2. A blazed-type multilayer diffraction grating with grooves of a saw-toothed shape which has added to the surface a multilayer film made of at least one of the materials pairs according to claim 1.

3. The laminar-type or blazed-type multilayer film coated diffraction grating according to claim 1 or 2, wherein the interval between grooves on the grating is constant or varied.


**Patentansprüche**

1. Multischicht-Diffraktionsgitter des laminaren Typs mit einer mehrschichtigen Folie, die zur Oberfläche hinzugefügt ist, wobei die Multischicht so ausgelegt ist, dass die Winkelbedingungen von einfallendem Licht und gebrochenem Licht mit Bezug auf die benutzte Wellenlänge "$\lambda$" von 0,1 bis 1 nm gleichzeitig die folgenden Bedingungen erfüllen:

(1) die Formel eines Diffraktionsgitters:

$$\lambda m_G=\sigma(\sin\alpha+\sin\beta),$$

(2) eine erweiterte Bragg-Bedingung eines mehrschichtigen, filmbeschichteten Diffraktionsgitters:

$$m_C\lambda=D(R_\alpha\cos\alpha+R_\beta\cos\beta),$$

$$R_\alpha=\sqrt{(1-(2\delta-\delta^2)/\cos^2\alpha)},$$

und

$$R_\beta=\sqrt{(1-(2\delta-\delta^2)/\cos^2\beta)}$$

(3) die Nuttiefe, die das Licht nullter Ordnung unterdrückt:

$$h=\lambda/4\cos\alpha,$$

und
(4) die Bedingung für das Verhältnis zwischen der Breite eines Stegs und der Gitterkonstante:

$$D.R.=g_1/\sigma=(g_2-h(\tan\alpha-\tan\beta))/\sigma,$$

wobei "$\alpha$" der von der Oberflächennormalen gemessene Einfallswinkel ist und 80 Grad oder mehr beträgt, "$\beta$" der Diffraktionswinkel des gebrochenen Lichts ist, ebenfalls von derselben Normallinie gemessen, "D" eine periodische Länge der Multischicht ist, "n" der durchschnittliche Beugungsindex eines mehrschichtigen Films ($\delta= n-1$) ist, "$m_G$"

die Diffraktionsordnung des Diffraktionsgitters ist, "$m_c$" die Interferenzordnung der Multischicht ist, "h" die Tiefe von Nuten ist, "$g_1$" die Breite eines Stegs ist und "$g_2$" die Breite einer Senke ist,
ferner **dadurch gekennzeichnet, dass** die Multischicht aus einem Paar von zwei Materialien in mehreren Schichten besteht, wobei jedes Materialpaar aus Kobalt und Siliciumdioxid, Kobalt und Siliciumcarbid oder Kobalt und Kohlenstoff besteht.

2. Multischicht-Diffraktionsgitter des Blaze-Typs mit Nuten einer Sägezahnform, die zur Oberfläche einer mehrschichtigen Folie aus wenigstens einem der Materialpaare nach Anspruch 1 hinzugefügt wurde.

3. Multischicht-Diffraktionsgitter des Laminartyps oder des Blaze-Typs, welches filmbeschichtet ist, nach Anspruch 1 oder 2, wobei das Intervall zwischen Nuten auf dem Gitter konstant oder variiert ist.

**Revendications**

1. Réseau de diffraction multicouche de type laminaire comportant un film multicouche ajouté à la surface, laquelle multicouche étant conçue de sorte que les conditions angulaires de lumière incidente et de lumière diffractée par rapport à la longueur d'onde utilisée « λ » de 0,1 à 1 nm satisfassent simultanément :

(1) la formule d'un réseau de diffraction,

$$\lambda m_G = \sigma(sin\alpha + sin\beta),$$

(2) une condition de Bragg étendu d'un réseau de diffraction enduit d'un film multicouche,

$$m_c\lambda = D(R_\alpha cos\alpha + R_\beta cos\beta),$$

$$R_\alpha = \sqrt{(1 - (2\delta - \delta^2)/cos^2\alpha},$$

et

$$R_\beta = \sqrt{(1 - (2\delta - \delta^2)/cos^2\beta},$$

(3) la profondeur de sillon supprimant la lumière d'ordre zéro,

$$h = \lambda/4cos\alpha,$$

et
(4) la condition pour le rapport entre la largeur d'un méplat et la constante de réseau,

$$D.R = g_1/\sigma = (g_2 - h(tan\alpha - tan\beta))/\sigma,$$

où « α » est l'angle d'incidence mesuré à partir de la normale de surface et est égal à 80 degrés ou plus, « β » est l'angle de diffraction de la lumière diffractée également mesuré à partir de la même ligne normale, « D » est une longueur périodique de la multicouche, « n » est l'indice de réfraction moyen d'un film multicouche ($\delta = n-1$), « $m_G$ » est l'ordre de diffraction du réseau de diffraction, « $m_C$ » est l'ordre d'interférence de la multicouche, « h » est la profondeur des sillons, « $g_1$ » est la largeur d'un méplat et « $g_2$ » est la largeur d'une vallée, **caractérisé en outre en ce que** la multicouche se compose d'une paire de deux matériaux en couches multiples, chaque paire de matériaux étant constituée de cobalt et de dioxyde de silicium, de cobalt et de carbure de silicium, ou de cobalt et de carbone.

2. Réseau de diffraction multicouche de type à échelette avec des sillons en forme de dents de scie à la surface duquel est ajouté un film multicouche constitué d'au moins l'une des paires de matériaux selon la revendication 1.

3. Réseau de diffraction enduit d'un film multicouche de type laminaire ou à échelette selon la revendication 1 ou 2, dans lequel l'intervalle entre des sillons sur le réseau est constant ou varié.

## Fig.1

## Fig.2

| WAVELENGTH(nm) | n | α (DEGREES) | (DEGREES) |
|---|---|---|---|
| 0. 154 | 0. 999986 | 89. 63024 | 88. 83807 |
| 0. 2 | 0. 999976 | 89. 42676 | 88. 61998 |
| 0. 3 | 0. 999944 | 88. 95818 | 88. 14277 |
| 0. 4 | 0. 999901 | 88. 48438 | 87. 66564 |
| 0. 6 | 0. 999779 | 87. 91763 | 86. 28583 |
| 0. 8 | 0. 999615 | 86. 58563 | 85. 76141 |
| 1 | 0. 999418 | 85. 64389 | 84. 81699 |

## Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. K. WARBURTON.** *Nucl. Instr. Meth. A,* 1990, vol. 291, 278

- The Fifth Series of Experimental Chemistry. **M. KOIKE ; K. SANO.** Spectroscopy and Diffraction II. Maruzen, 2005, vol. 10, 106-141